(19) Europäisches Patentamt
European Patent Office
Office européen des brevets

(11) Veröffentlichungsnummer: **0 030 318**
A2

(12) # EUROPÄISCHE PATENTANMELDUNG

(21) Anmeldenummer: **80107343.8**

(22) Anmeldetag: **25.11.80**

(51) Int. Cl.³: **C 09 B 29/09**, D 06 P 1/18, D 06 P 3/54

(30) Priorität: **04.12.79 DE 2948648**

(43) Veröffentlichungstag der Anmeldung: **17.06.81**
**Patentblatt 81/24**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Grund, Norbert, Dr., Luitpoldstrasse 172, D-6700 Ludwigshafen (DE)**
Erfinder: **Hansen, Guenter, Dr., Alwin-Mittasch-Platz 8, D-6700 Ludwigshafen (DE)**
Erfinder: **Kermer, Wolf-Dieter, Dr., Im Schlittweg 4, D-6701 Fussgoenheim (DE)**

(54) **Monoazofarbstoffe der Benzisothiazol-Azoanilinreihe und ihre Verwendung zum Färben synthetischer Fasern.**

(57) Die Erfindung betrifft Azofarbstoffe mit heterocyclischen Diazokomponenten der allgemeinen Formel I

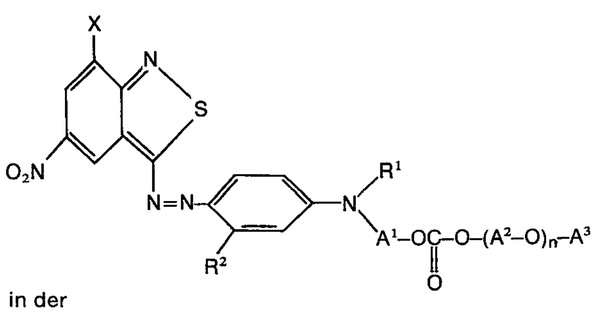

I,

in der

X Wasserstoff, Chlor oder Brom,
$R^1$ $C_1$- bis $C_4$-Alkyl oder $C_3$- bis $C_5$-Alkenyl,
$R^2$ Wasserstoff, Methyl oder Chlor,
$A^1$ gegebenenfalls durch Sauerstoff unterbrochenes $C_2$- bis $C_6$-Alkylen,
$A^2$ einen $C_2$- bis $C_4$-Alkylenrest,
$A^3$ $C_1$- bis $C_4$-Alkyl und
n 2 oder 3

bedeuten.

Die erfindungsgemäßen Farbstoffe eignen sich vorzugsweise zum Färben von Polyestern.

EP 0 030 318 A2

Azofarbstoffe mit heterocyclischen Diazokomponenten BEZEICHNUNG GEÄNDERT siehe Titelseite

Die Erfindung betrifft Farbstoffe der allgemeinen Formel I

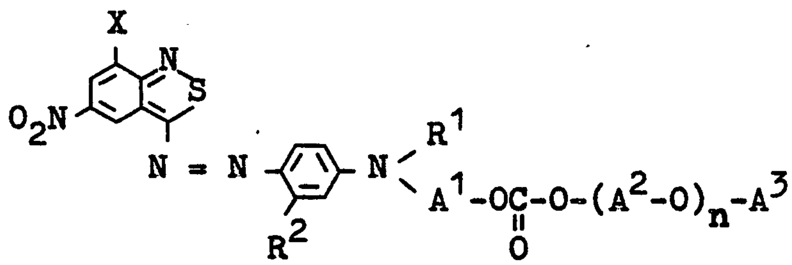

I ,

in der

X Wasserstoff, Chlor oder Brom,

$R^1$ $C_1$- bis $C_4$-Alkyl oder $C_3$- bis $C_5$-Alkenyl,

$R^2$ Wasserstoff, Methyl oder Chlor,

$A^1$ gegebenenfalls durch Sauerstoff unterbrochenes $C_2$- bis $C_6$-Alkylen,

$A^2$ einen $C_2$- bis $C_4$-Alkylenrest,

$A^3$ $C_1$- bis $C_4$-Alkyl und

n 2 oder 3

bedeuten.

Reste $R^1$ sind beispielsweise:

$CH_3$, $C_2H_5$, $C_3H_7$, $C_4H_9$, $CH_2CH=CH_2$, $CH_2CH=CH-CH_3$ oder $CH_2\underset{CH_3}{\underset{|}{C}}=CH_2$.

Bg/BL

Reste $A^1$ sind z. B.:
$-CH_2CH_2-$, $-CH_2CH_2CH_2-$, $-CH_2CH-CH_3$, $-CH_2CHC_2H_5$ oder $-CH_2CH_2OCH_2CH_2-$.

Als Reste $A^2$ sind beispielsweise $-CH_2CH_2-$, $-CH_2CHCH_2$, $-CH_2CH_2CH_2-$ oder $-CH_2CHC_2H_5$ zu nennen.

Reste $A^3$ sind z.B.:
Methyl, Äthyl, n- oder i-Propyl oder n- oder i-Butyl.

Zur Herstellung der Farbstoffe der Formel I kann man eine Diazoniumverbindung von Aminen der Formel II

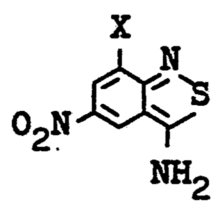 II

mit einer Kupplungskomponente der Formel III

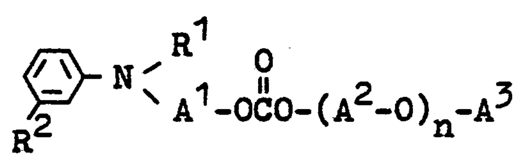 III

umsetzen. Diazotierung und Kupplung bieten gegenüber bekannten Verfahren keine Besonderheiten.

Von besonderer technischer Bedeutung sind die Farbstoffe der Formel I a

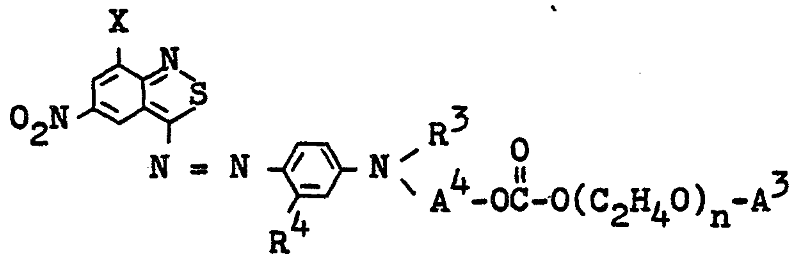

I a,

in der

$R^3$ $C_2$- bis $C_4$-Alkyl,

$R^4$ Wasserstoff oder Methyl und

$A^4$ $-CH_2CH_2-$, $-CH_2CHCH_3$ oder $-CH_2CHC_2H_5$ sind

und X, $A^3$ und n die bereits angegebenen Bedeutungen haben.

Die Farbstoffe der Formel I eignen sich zum Färben von synthetischen und halbsynthetischen Fasern, z. B. Celluloseacetaten, Polyamiden und insbesondere Polyestern. Man erhält farbstarke Färbungen mit guten Licht-, Naß- und Thermofixierechtheiten.

Besonders bevorzugt zum Färben von Polyestern sind Verbindungen der Formel I b

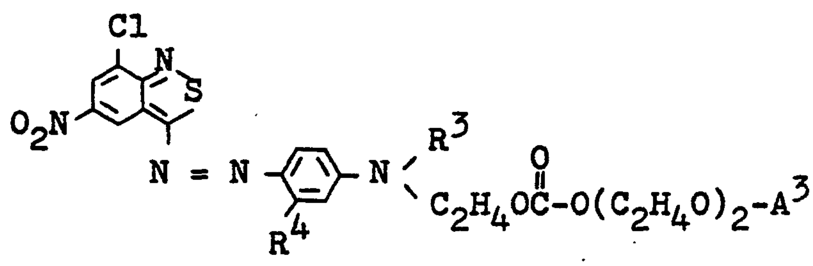

I b ,

in der
$R^3$, $R^4$ und $A^3$ die angegebenen Bedeutungen haben.

In den folgenden Beispielen beziehen sich Angaben über Teile und Prozente, sofern nicht anders vermerkt, auf das Gewicht.

Beispiel 1

In 100 Teile 85 %ige Schwefelsäure trägt man bei 10 bis 15 °C 9,8 Teile 3-Amino-5-nitro-2,1-benzisothiazol ein. Zu dieser Lösung tropft man bei 0 bis 5 °C 16 Teile 45 %ige Nitrosylschwefelsäure. Die erhaltene Diazoniumsalzlösung wird 3 Stunden bei 0 bis 5 °C nachgerührt und anschließend in eine Lösung von 15,6 Teilen der Verbindung der Formel

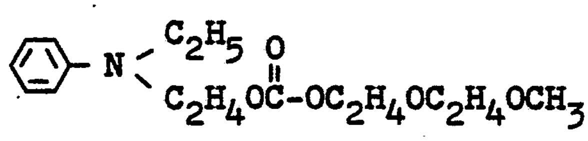 ,

50 Teilen konzentrierter Salzsäure, 40 Teilen Dimethylformamid, 1,5 Teilen Amidosulfonsäure, 500 Teilen Wasser und 500 Teilen Eis einfließen gelassen. Mit Na-acetat wird anschließend ein pH von 0,5 eingestellt. Nach beendeter Kupplung wird der ausgefallene Farbstoff abgesaugt, mit Wasser neutral gewaschen und bei 50 °C unter vermindertem Druck getrocknet.

Man erhält 18 Teile des Farbstoffs der Formel

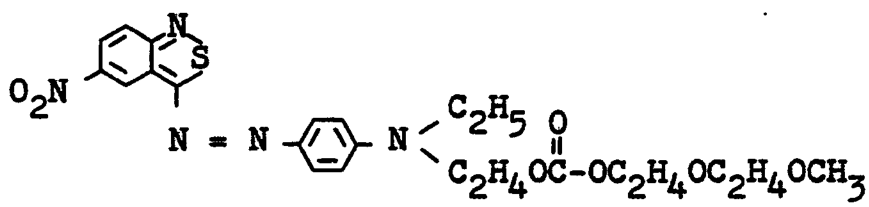
,

der auf Polyestern und Celluloseestern intensive rotstichig blaue Färbungen mit guten Echtheitseigenschaften liefert.

Beispiel 2

In 120 Teile konzentrierte Schwefelsäure trägt man bei 15 - 20 °C 11,5 Teile 3-Amino-5-nitro-7-chlor-2,1-benzisothiazol ein. Anschließend gibt man 60 Teile einer Mischung aus Eisessig und Propionsäure (17 : 3) zu, kühlt auf 0 bis 5 °C ab und tropft bei dieser Temperatur 16,5 Teile 45 %ige Nitrosylschwefelsäure zu. Die erhaltene Diazoniumsalzlösung wird 5 Stunden bei 0 bis 5 °C nachgerührt und anschließend in eine Lösung von 16,3 Teilen der Verbindung der Formel

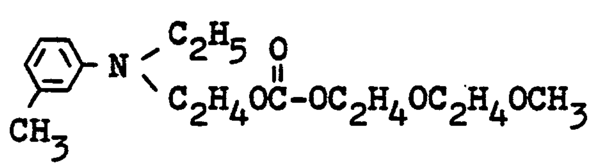
,

25 Teilen konzentrierter Salzsäure, 500 Teilen Wasser, 500 Teilen Eis und 2 g Amidosulfonsäure einfließen gelassen. Nach beendeter Kupplung wird der ausgefallene Farbstoff abgesaugt, mit Wasser neutral gewaschen und

bei 50 °C unter vermindertem Druck getrocknet. Man erhält 21 Teile des Farbstoffs der Formel

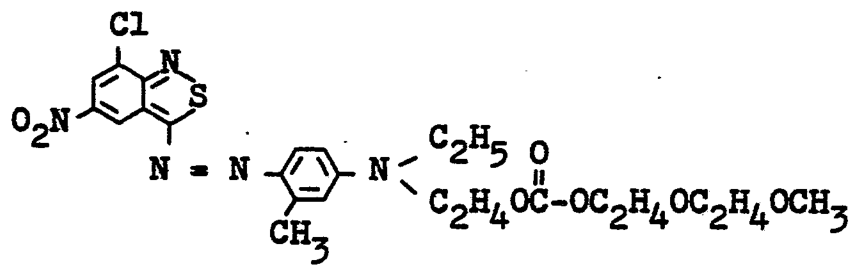

,

der auf Polyestern intensive grünstichig blaue Färbungen mit guten Echtheitseigenschaften liefert.

Fein verteilte, in wäßrige Färbeflotten leicht einrührbare Farbstoffzubereitungen erhält man z. B. wie folgt:

Der Farbstoff (getrockneter Farbstoff oder feuchtes Preßgut) wird in Gegenwart von Dispergiermitteln bei Temperaturen von 40 bis 110 °C, vorzugsweise bei 60 bis 90 °C, gemahlen. Vorteilhaft ist auch eine Vorbehandlung, z. B. Erwärmen in wäßriger Suspension oder als wasserfeuchte Paste gegebenenfalls unter Zusatz von Dispergier- und/ oder organischen Lösungsmitteln auf Temperaturen von 50 bis 120 °C.

Analog zu den beschriebenen Methoden erhält man auch die in der folgenden Tabelle durch Angabe der Substituenten gekennzeichneten Farbstoffe, die auf Polyesterfasern Färbungen im angegebenen Farbton ergeben.

| Beispiel | X | $R^1$ | $R^2$ | $A^1$ | $A^2$ | n | $A^3$ | Farbton |
|---|---|---|---|---|---|---|---|---|
| 3 | H | $C_2H_5$ | $CH_3$ | $C_2H_4$ | $C_2H_4$ | 2 | $CH_3$ | blau |
| 4 | H | $C_4H_9$ | H | $C_2H_4$ | $C_2H_4$ | 2 | $CH_3$ | rotstichig blau |
| 5 | H | $C_2H_5$ | H | $CH_2\underset{\vert}{C}HC_2H_5$ | $C_2H_4$ | 2 | $CH_3$ | rotstichig blau |
| 6 | H | $C_2H_5$ | H | $C_2H_4$ | $C_2H_4$ | 2 | $C_4H_9$ | rotstichig blau |
| 7 | H | $C_2H_5$ | H | $C_2H_4$ | $C_2H_4$ | 2 | $C_2H_5$ | rotstichig blau |
| 8 | H | $C_2H_5$ | H | $C_2H_4$ | $C_2H_4$ | 3 | $C_2H_5$ | rotstichig blau |
| 9 | Br | $C_2H_5$ | H | $C_2H_4$ | $C_2H_4$ | 2 | $CH_3$ | blau |
| 10 | Br | $C_2H_5$ | $CH_3$ | $C_2H_4$ | $C_2H_4$ | 2 | $CH_3$ | grünstichig blau |
| 11 | Br | $C_2H_5$ | $CH_3$ | $C_2H_4$ | $C_2H_4$ | 3 | $C_2H_5$ | grünstichig blau |

| Beispiel | X | $R^1$ | $R^2$ | $A^1$ | $A^2$ | n | $A^3$ | Farbton |
|---|---|---|---|---|---|---|---|---|
| 12 | Br | $C_2H_5$ | $CH_3$ | $C_2H_4$ | $C_2H_4$ | 2 | $C_2H_5$ | grünstichig blau |
| 13 | Cl | $C_2H_5$ | H | $C_2H_4$ | $C_2H_4$ | 2 | $CH_3$ | blau |
| 14 | Cl | $C_2H_5$ | H | $C_2H_4$ | $C_2H_4$ | 2 | $C_2H_5$ | blau |
| 15 | Cl | $C_2H_5$ | $CH_3$ | $C_2H_4$ | $C_2H_4$ | 2 | $C_2H_5$ | grünstichig blau |
| 16 | Cl | $C_4H_9$ | H | $C_2H_4$ | $C_2H_4$ | 2 | $CH_3$ | blau |
| 17 | Cl | $C_2H_5$ | H | $CH_2\underset{\mid}{CH}CH_3$ | $C_2H_4$ | 2 | $CH_3$ | blau |

## Patentansprüche

1. Azofarbstoffe mit heterocyclischen Diazokomponenten der allgemeinen Formel I

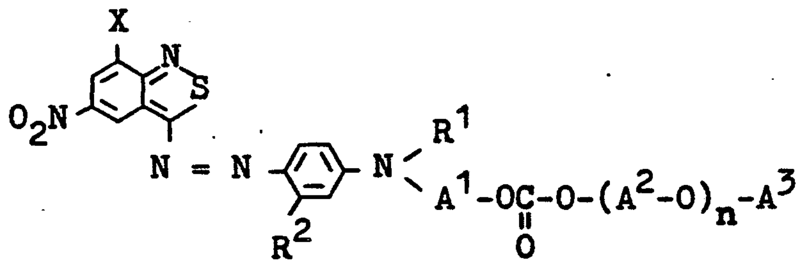

I ,

in der

X Wasserstoff, Chlor oder Brom,

$R^1$ $C_1$- bis $C_4$-Alkyl oder $C_3$- bis $C_5$-Alkenyl,

$R^2$ Wasserstoff, Methyl oder Chlor,

$A^1$ gegebenenfalls durch Sauerstoff unterbrochenes $C_2$- bis $C_6$-Alkylen,

$A^2$ einen $C_2$- bis $C_4$-Alkylenrest,

$A^3$ $C_1$- bis $C_4$-Alkyl und

n 2 oder 3

bedeuten.

2. Farbstoffe gemäß Anspruch 1 der allgemeinen Formel

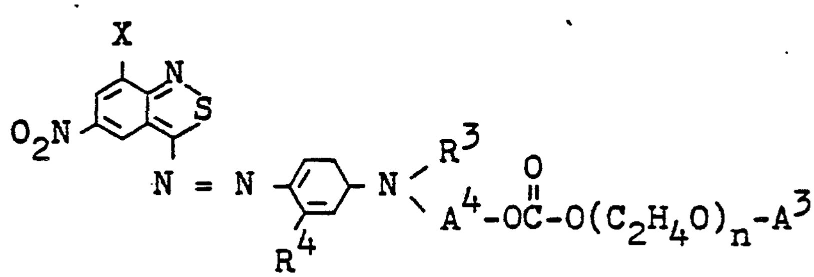

I a,

in der

$R^3$ $C_2$- bis $C_4$-Alkyl,

$R^4$ Wasserstoff oder Methyl und

$A^4$ $-CH_2CH_2-$, $-CH_2CHCH_3$ oder $-CH_2CHC_2H_5$ sind und X, $A^3$ und n die bereits angegebenen Bedeutungen haben.

3. Farbstoffe gemäß Anspruch 1 der allgemeinen Formel

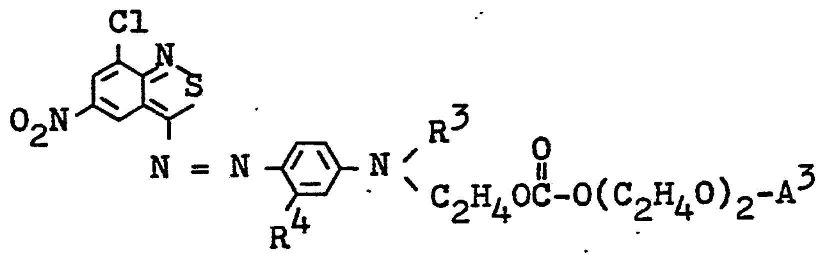

I b ,

in der

$R^3$, $R^4$ und $A^3$ die angegebenen Bedeutungen haben.

4. Verwendung der Farbstoffe gemäß Anspruch 1 bis 3 zum Färben von synthetischen Fasern, insbesondere Polyestern.